# EUROPEAN PATENT APPLICATION

(11) **EP 4 440 052 A1**
(43) Date of publication of application: **02.10.2024**
(21) Application number: 24167452.2
(22) Date of filing: 28.03.2024
(51) Int. Cl.: H04L 12/403

(54) **SINGLE-WIRE COMMUNICATION METHOD AND SINGLE-WIRE COMMUNICATION SYSTEM**

(30) Priority: 31.03.2023 CN 202310341164
(71) Applicant: Silergy Semiconductor Technology (Hangzhou) Ltd, Zhejiang 310051 (CN)
(72) Inventor: YANG, Yuanyu, Hangzhou City, Zhejiang Province,, 310051 (CN); XU, Xiaoqiang, Hangzhou City, Zhejiang Province,, 310051 (CN); WANG, Jianxin, Hangzhou City, Zhejiang Province,, 310051 (CN)
(74) Representative: Viering, Jentschura & Partner mbB Patent- und Rechtsanwälte

(57) **Abstract**

A single-wire communication method and a single-wire communication system are disclosed. The single-wire communication system sequentially performs address coding on a plurality of slave devices according to the positions of the plurality of slave devices in a communication link, and a master device sequentially finish the address coding of all of the plurality of slave devices by transmitting an addressing command. And when data broadcasting or call transmission is performed on the latter stage, the communication of the master device and each of the plurality of slave devices may be implemented by inserting corresponding address data into the coding command.

## Description

### FIELD OF THE INVENTION

The present disclosure relates to a technical field of communication, and particularly relates to a technical field of power switches, and more specifically relates to a single-wire communication method and a single-wire communication system.

### BACKGROUND OF THE INVENTION

As technology continuously develops, communication is vital function among different equipment. Currently, the existing main communication is wired communication and wireless communication. The traditional wired communication is serial communication and parallel communication. The serial communication is applied to long-distance communication, and the parallel communication is applied to short-distance communication.

Single-wire communication serves as one of the serial communication and has advantages of less pins and saving wiring resources.

### SUMMARY OF THE INVENTION

In light of the aforementioned drawbacks, the embodiments of the present disclosure provide a single-wire communication method and a single-wire communication system to solve a communication problem of multiple same equipment serially connected through a single-wire and improve communication efficiency of the single-wire communication.

According to the first aspect of the embodiments of the present disclosure, the single-wire communication method for a single-wire communication system is provided, and includes a master device and a plurality of slave devices, wherein the master device and each of the plurality of slave devices (1~n) are sequentially connected through a single wire, wherein the single-wire communication method includes: sequentially transmitting an addressing command to each of the plurality of slave device by the master device, wherein each of the plurality of slave devices (1 ~n) when receiving the addressing command serves as a current slave device; if the current slave device has not been addressed, setting an address of the current slave device as address data of the received addressing command; and if the current slave device has been addressed, transmitting the received addressing command to a next slave device.

Optionally, after the plurality of slave devices (1~n) finish being addressed, the method further includes: coupling a data output terminal (MO) of the master device with a data input terminal (MI1~MIn) of each of the plurality of slave devices (1~n) to perform serial bus communication.

Optionally, the master device and the plurality of slave devices (1~n) form a communication link, the plurality of slave devices (1~n) in the communication link include a first slave device (1) to a nth slave device (n), and n is equal to and greater than one, and the single-wire communication method further includes: after the plurality of slave devices (1~n) finish being addressed, connecting a data output terminal (MO) of the master device to a data input terminal (MI1) of the first slave device (1), and connecting the data output terminals (MO1~MOn-1) of the first slave device (1) to the (n-1)th slave device (n-1) to the data input terminals (MI2~MIn) of the second slave device (2) to the nth slave device (n) respectively in the communication link to perform chained serial communication.

Optionally, the method further includes: if the current slave device finishes being addressed, controlling the current slave device to be in a pass-through mode.

Optionally, each of the plurality of slave devices (1~n) includes a switch (S1~Sn), and the switch (S1~Sn) is coupled between a data input terminal (MI1~Mln) and a data output terminal (MO1~MOn) of the corresponding slave device (1~n), and the single-wire communication method further includes: when the current slave device finishes being addressed, controlling the switch to be turned on; and when the current slave device does not finish being addressed, controlling the switch to remain off.

Optionally, each of the plurality of slave devices (1~n) includes a buffer (B1~Bn), and the buffer (B1~Bn) is coupled between a data input terminal (MI1~Mln) and a data output terminal (MO1~MOn) of the corresponding slave device, and the single-wire communication method further includes: when the current slave device finishes being addressed, enabling the buffer so that communication channel between the data input terminal and the data output terminal of the current slave device is turned on; and when the current slave device does not finish being addressed, disabling the buffer so that the communication channel between the data input terminal and the data output terminal of the current slave device remains off.

Optionally, each of the plurality of slave devices (1~n) includes a communication unit, and the communication unit is coupled between a data input terminal (MI1~MIn) and a data output terminal (MO1~MOn) of the corresponding slave device, and the single-wire communication method further includes: when the current slave device finishes being addressed, transmitting the received addressing command to the next slave device by the communication unit; wherein when the current slave device does not finish being addressed, the communication unit does not transmit the received addressing command to the next slave device.

A second aspect of the present disclosure provides a single-wire communication system including: a master device; and a plurality of slave devices (1~n) including a first slave device (1) to a nth slave device (n); wherein the master device sequentially transmits an addressing command to each of the plurality of slave device, wherein each of the plurality of slave devices (1~n) when receiving the addressing command serves as a current slave device; wherein if the current slave device has not been addressed, an address of the current slave device is set as address data of the received addressing command; wherein if the current slave device has been addressed, the received addressing command is transmitted to a next slave device.

Optionally, after the plurality of slave devices (1~n) finish being addressed, a data output terminal (MO) of the master device is coupled with a data input terminal (MI1~MIn) of each of the plurality of slave devices (1~n) to perform serial bus communication.

Optionally, wherein the master device and the plurality of slave devices (1~n) form a communication link, the plurality of slave devices (1~n) in the communication link include a first slave device (1) to a nth slave device (n), and n is equal to and greater than one, wherein after the plurality of slave devices (1~n) finish being addressed, a data output terminal (MO) of the master device is connected to a data input terminal (MI1) of the first slave device (1), and the data output terminals (MO1~MOn-1) of the first slave device (1) to the (n-1)th slave device (n-1) is connected to the data input terminals (MI2~Mln) of the second slave device (2) to the nth slave device (n) respectively in the communication link to perform chained serial communication.

Optionally, if the current slave device finishes being addressed, the current slave device is controlled to be in a pass-through mode.

Optionally, each of the plurality of slave devices (1~n) includes a switch (S1~Sn), and the switch (S1~Sn) is coupled between a data input terminal (MI1~Mln) and a data output terminal (MO1~MOn) of the corresponding slave device (1~n), wherein when the current slave device finishes being addressed, the switch is controlled to be turned on; and when the current slave device does not finish being addressed, the switch is controlled to remain off.

Optionally, each of the plurality of slave devices (1~n) includes a buffer (B1~Bn), and the buffer (B1~Bn) is coupled between a data input terminal (MI1~Mln) and a data output terminal (MO1~MOn) of the corresponding slave device, wherein when the current slave device finishes being addressed, the buffer is enabled so that communication channel between the data input terminal and the data output terminal of the current slave device is turned on; and wherein when the current slave device does not finish being addressed, the buffer is disabled so that the communication channel between the data input terminal and the data output terminal of the current slave device remains off.

Optionally, each of the plurality of slave devices (1~n) includes a communication unit, and the communication unit is coupled between a data input terminal (MI1~MIn) and a data output terminal (MO1~MOn) of the corresponding slave device, wherein when the current slave device finishes being addressed, the received addressing command is transmitted to the next slave device by the communication unit; and when the current slave device does not finish being addressed, the communication unit does not transmit the received addressing command to the next slave device.

Optionally, a data input terminal of the master device is not connected to a data output terminal of a last slave device.

Optionally, a data input terminal of the master device is connected to a data output terminal of a last slave device.

The single-wire communication system in the embodiments of the present disclosure sequentially performs address coding on the plurality of slave devices according to the positions of the plurality of slave devices in the communication link, and the master device sequentially finish the address coding of all of the plurality of slave devices by transmitting the addressing command. And when data broadcasting or call transmission is performed on the latter stage, the communication (e.g., response or reading) of the master device and each of the plurality of slave devices may be implemented by inserting corresponding address data into the coding command.

### BRIEF DESCRIPTION OF THE DRAWINGS

The above and other objects, features, and advantages of the present disclosure will be clearer by referring to the accompanying drawings for the following detailed description of the embodiments of the present disclosure, in which:
Fig. 1 is a circuit structural diagram of a single-wire communication system according to a first embodiment of the present disclosure.
Fig. 2 is a circuit structural diagram of a single-wire communication system according to a second embodiment of the present disclosure.
Fig. 3 is a circuit structural diagram of a single-wire communication system according to a third embodiment of the present disclosure.
Fig. 4 is a circuit structural diagram of a single-wire communication system according to a fourth embodiment of the present disclosure.
Fig. 5 is a schematic flowchart of a single-wire communication method according to embodiments of the present disclosure.

### DETAILED DESCRIPTION

The following describes the present disclosure based on the embodiments, but the present disclosure is not merely limited to these embodiments. The detailed descriptions of the present disclosure in the following elaborate on some specific details. Those skilled in the art can fully understand the present disclosure without the description of these details. Well-known methods, procedures, processes, components and circuits are not described in detail to avoid obscuring the essence of the present disclosure.

In addition, the person skilled in the art should understand that the accompanying drawings are only for the purpose of illustration and are not drawn to scale.

At the same time, it should be understood that "circuit" in the following description refers to a conducting loop formed by at least one component or sub-circuit through electrical connection or electromagnetic connection. When a component or a circuit is referred to as being "connected" to another component or the component/circuit is referred to as being "connected" between two nodes, it may be directly coupled or connected to another component or intervening component(s) may be present. The connection between the components may be physical, logical, or a combination thereof. On the contrary, when a component is referred to as being "directly coupled" or "directly connected" to another component, it is meant that there are no intervening component(s) present therebetween.

Unless otherwise required by the context, the terms "comprise" or "comprising," "include" or "including" and the like used in the whole description herein and throughout the claims should be interpreted as inclusive meaning rather than exclusive or exhaustive meaning. In other words, the terms "comprise" or "comprising," "include" or "including" and the like used in the whole description herein and throughout the claims should be interpreted as meaning of "including but be not limited to."

In the description of the present disclosure, it should be understood that the terms "first", "second" and the like are only used for the purpose of explanation, and should not be construed as indicating or implying relative importance. Additionally, in the description of the present disclosure, "plural" means two or more unless otherwise specified.

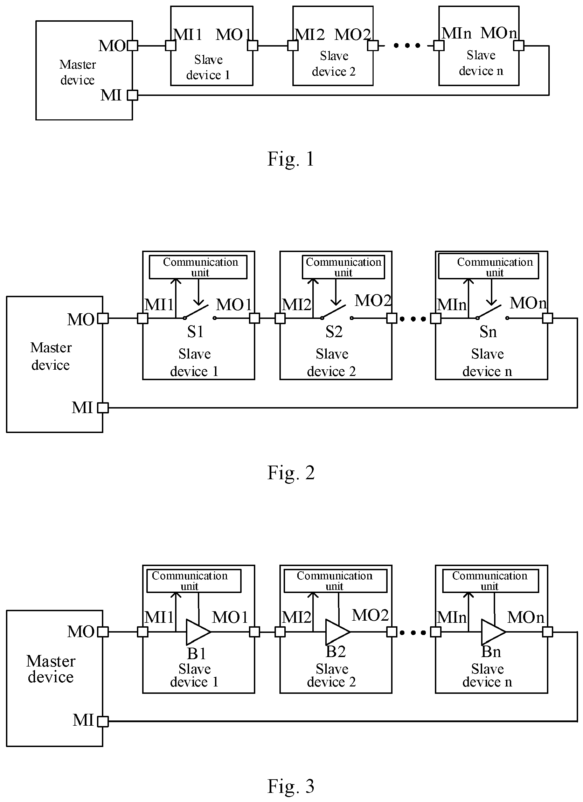

Fig. 1 is a circuit structural diagram of a single-wire communication system according to a first embodiment of the present disclosure. In the present embodiment, the single-wire communication system includes a master device and a plurality of slave devices, and the master device and each of the plurality of slave devices are sequentially connected through a single-wire. The master device and the plurality of slave devices form a communication link, and the plurality of slave devices in the communication link include a first slave device 1 to a nth slave device n. In the present embodiment, a chained and circular serial single-wire communication system is taken as an example to explain, but the invention is not limited to this. In the single-wire communication system, the data output terminal MO of the master device is connected to the data input terminal MI1 of the first slave device 1, and the data input terminal MI of the master device is connected to the data output terminal MOn of the nth slave device n. The data output terminal MO1 of the first slave device 1 is connected to the data input terminal MI2 of the second slave device 2, and so on, the data input terminal MIn of the nth slave device n is connected to the data output terminal MOn-1 of the (n-1)th slave device n-1, thereby forming the circular communication system.

Before address initialization, the plurality of slave devices do not have any addresses. When the address initialization starts, the master device sequentially transmits an addressing command with different address data to the plurality of slave devices without being addressed according to the positions of the plurality of slave devices in the communication link. Each of the plurality of slave devices 1~n when receiving the addressing command serves as a current slave device. If the current slave device has not been addressed, the address of the current slave device is set as the address data of the addressing command. If the current slave device has been addressed, the received addressing command is transmitted to a next slave device. It should be understood that the communication method in the first embodiment of the present disclosure is also applied to a chained and non-circular serial single-wire communication system. In the chained and non-circular serial single-wire communication system, the data output terminal MO of the master device is connected to the data input terminal MI1 of the first slave device 1, and the data input terminals of the second slave device 2 to the nth slave device n is respectively connected to data output terminals of its last slave devices (i.e., the first slave device 1 to the (n-1)th slave device n-1 ) in the communication link, and the data output terminals of the first slave device 1 to the (n-1)th slave device n-1 is respectively connected to data input terminals of its next slave devices (i.e., the second slave device 2 to the nth slave device n ) in the communication link.

In one embodiment, if the current slave device has been addressed, the current slave device is in a pass-through mode, and in other words, the communication state between the data input terminal and the data output terminal of the current slave device is equivalent to conductor wire connection. Specifically, a buffer or a switch is connected between the data input terminal and the data output terminal of the current slave device, if the current slave device has been addressed, the switch is controlled to be turned on or the buffer is controlled to be enabled, the invention is not limited to this, any embodiment that can realize that if the slave device has been addressed, the slave device is in a pass-through mode is within the protection scope of the present invention. When the master device transmits the addressing command to the slave device which finishes being addressed, the slave device which finishes being addressed is in the pass-through mode and the addressing command transmitted by the master device is transmitted to the slave device which is not addressed by passing through one or more slave devices which finish being addressed, thereby sequentially finishing the addressing of the plurality of slave devices.

Fig. 2 is a circuit structural diagram of a single-wire communication system according to a second embodiment of the present disclosure. In the present embodiment, the single-wire communication system includes the master device and the plurality of slave devices, and the master device and each of the plurality of slave devices are sequentially connected through a single-wire. The master device and the plurality of slave devices form the communication link, and the plurality of slave devices in the communication link include a first slave device 1 to a nth slave device n. In the single-wire communication system, the data output terminal MO of the master device is connected to the data input terminal MI1 of the first slave device 1, and the data input terminal MI of the master device is connected to the data output terminal MOn of the nth slave device n. The data output terminal MO1 of the first slave device 1 is connected to the data input terminal MI2 of the second slave device 2, and so on, the data input terminal MIn of the nth slave device n is connected to the data output terminal MOn-1 of the (n-1)th slave device n-1, thereby forming the circular communication system.

In the present embodiment, the circular serial single-wire communication system is taken as an example to explain, but the invention is not limited to this. In the present embodiment, each of the plurality of slave devices includes a switch, and the switch is coupled between the data input terminal and the data output terminal of the corresponding slave device to sequentially finish the addressing of the plurality of slave devices according to the positions of the plurality of slave devices in the communication link. When the address initialization starts, the master device transmits the addressing command, and the first slave device 1 sets its address as the address data of the addressing command transmitted by the master device according to the content of the addressing command, and then the switch S1 is closed to be turned on. The master device transmits the addressing command again, and the first slave device 1 does not require addressing because the first slave device 1 has finished being addressed. The second slave device 2 sets its address as the address data of the addressing command transmitted by the master device according to the content of the addressing command, and then the switch S2 is closed to be turned on. And so on, the master device transmits the addressing command for the nth time, and the first slave device 1 to the (n-1)th slave device n-1 do not require addressing because the first slave device 1 to the (n-1)th slave device have finished being addressed. The nth slave device n receives the addressing command through first slave device 1 to the (n-1)th slave device n-1, and sets its address as the address data of the addressing command transmitted by the master device according to the content of the addressing command, and then the switch Sn is closed to be turned on (i.e., the switch Sn is connected). The initialization of the addresses of the plurality of slave devices finishes until the nth slave device n finishes being addressed. In the present embodiment, if the current slave device has been addressed, the current slave device is in the pass-through mode, and in other words, the switch between the data input terminal and the data output terminal of the current slave device is turned on and it is equivalent to the conductor wire connection, and the switch in the slave device without being addressed is turned off. When the master device transmits the addressing command, the slave device with being addressed is in the pass-through mode, and the addressing command is transmitted to the slave device which is not addressed by one or more slave devices with being addressed, thereby sequentially finishing the addressing of the plurality of slave devices.

In the present embodiment, after the address initialization finishes, the master device and each of the plurality of slave devices may implement two types of serial communication. In the present embodiment, one type of serial communication is given as an example, where the switches S1 to Sn are all turned on and the data output terminal MO of the master device is connected to the data input terminal of each of the plurality of slave devices, and thus, the master device may implement the serial bus communication with each of the plurality of slave devices according to the address data to improve communication efficiency. In the other type of serial communication, the master device is connected to the first slave device 1, and the second slave device 2 is connected to the first slave device 1, and so on, chained serial communication may be implemented. The chained serial communication is similar to I2C communication, and the master device may respond to and read each of the plurality of slave devices.

Fig. 3 is a circuit structural diagram of a single-wire communication system according to a third embodiment of the present disclosure. In the present embodiment, the single-wire communication system includes the master device and the plurality of slave devices, and the master device and each of the plurality of slave devices are sequentially connected by a single-wire. The master device and the plurality of slave devices form the communication link, and the plurality of slave devices in the communication link include a first slave device 1 to a nth slave device n. The difference between the single-wire communication system shown in Fig. 3 and the single-wire communication system shown in Fig. 2: each of the plurality of slave devices in the present embodiment utilizes a buffer to substitute the switch. The control and the communication logic of the single-wire communication system in the third embodiment is similar to the control and the communication logic of the single-wire communication system in the second embodiment and would not be repeated again.

In the present embodiment, if the current slave device has been addressed, the current slave device is in the pass-through mode, and in other words, the buffer is enabled so that the communication state between the data input terminal and the data output terminal of the current slave device is equivalent to the conductor wire connection, and the buffer in the slave device without being addressed is disabled. When the master device transmits the addressing command, the slave device with being addressed is in the pass-through mode, and the addressing command transmitted by the master device is transmitted to the slave device which is not addressed by one or more slave device with being addressed, thereby sequentially finishing the addressing of the plurality of slave devices. After the address initialization finishes, the master device and the communication units of the plurality of slave devices may implement serial communication.

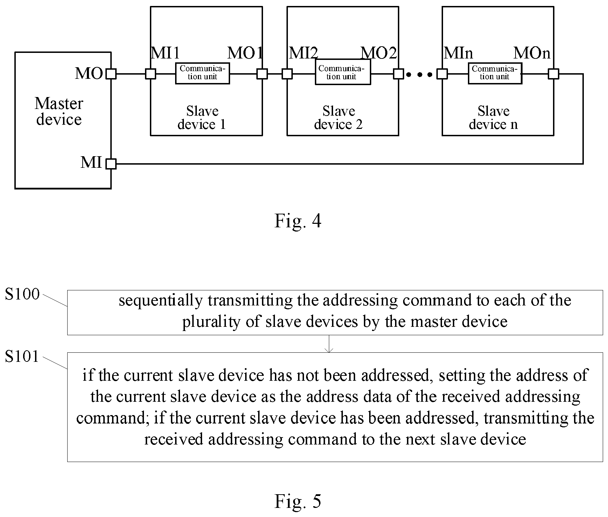

Fig. 4 is a circuit structural diagram of a single-wire communication system according to a fourth embodiment of the present disclosure. In the present embodiment, the single-wire communication system includes the master device and the plurality of slave devices, and the master device and each of the plurality of slave devices are sequentially connected by a single-wire. The master device and the plurality of slave devices form the communication link, and the plurality of slave devices in the communication link include a first slave device 1 to a nth slave device n. The difference between the single-wire communication system shown in Fig. 4 and the single-wire communication system shown in Fig. 2: each of the plurality of slave devices in the present embodiment includes a communication unit, and the communication unit is coupled between the data input terminal and the data output terminal of the corresponding slave device.

When the address initialization starts, the master device transmits the addressing command, the first slave device 1 has not finished being addressed, and the communication unit of the first slave device 1 does not transmit its received addressing command to the second slave device 2. The first slave device 1 sets its address as the address data of the addressing command transmitted by the master device according to the content of the addressing command. The master device transmits the addressing command again, and the communication unit of the first slave device 1 transmits the addressing command transmitted by the master device to the second slave device 2 because the first slave device 1 has finished being addressed. The second slave device 2 has not finished being addressed, and the communication unit of the second slave device 2 does not transmit its received addressing command to the third slave device 3. The second slave device 2 sets its address as the address data of the addressing command transmitted by the master device according to the content of the addressing command. And so on, the master device transmits the addressing command for the nth time, and the first slave device 1 to the (n-1)th slave device n-1 do not require addressing because the first slave device 1 to the (n-1)th slave device have finished being addressed. The communication unit of the first slave device 1 transmits the addressing command transmitted by the master device to the second slave device 2, the communication unit of the second slave device 2 transmits the addressing command received from the first slave device 1 to the third slave device 3, and so on, the communication unit of the (n-1)th slave device n-1 transmits the addressing command received from the (n-2)th slave device n-2 to the nth slave device n. The nth slave device n sets its address as the address data of the addressing command transmitted by the master device according to the content of the addressing command. The initialization of the addresses of the plurality of slave devices finishes until the nth slave device n finishes being addressed. In the present embodiment, if the current slave device has been addressed, the communication unit of the current slave device does not process the addressing command and directly transmits the addressing command to the next slave device, or the communication unit of the current slave device simply processes the addressing command and does not modify the address data in the addressing command, e.g., processing delay, and the transmits the addressing command to the next slave device. When the master device transmits the addressing command, the addressing command is transmitted to the slave device which is not addressed by one or more slave devices which finish being addressed, thereby sequentially finishing the addressing of the plurality of slave devices. After the address initialization finishes, the master device and the communication units of the plurality of slave devices may implement serial communication.

Fig. 5 is a schematic flowchart of a single-wire communication method according to embodiments of the present disclosure.

The single-wire communication method in the present embodiment of the present disclosure is applied to the single-wire communication system, and the single-wire communication system includes a master device and a plurality of slave devices, and the master device and each of the plurality of slave devices are sequentially connected through a single-wire. The master device and the plurality of slave devices form a communication link. Before the address initialization, the plurality of slave devices do not have any addresses. When the address initialization starts, the master device sequentially transmits the addressing command with different address data to the plurality of slave devices without being addressed according to the positions of the plurality of slave devices in the communication link. Each of the plurality of slave devices 1~n when receiving the addressing command serves as a current slave device. In step S100, sequentially transmitting the addressing command to each of the plurality of slave devices by the master device. In step S101, if the current slave device has not been addressed, setting the address of the current slave device as the address data of the received addressing command; if the current slave device has been addressed, transmitting the received addressing command to the next slave device. And so on, the initialization of the addresses of the plurality of slave devices finishes.

In the embodiments of the present disclosure, the single-wire communication system sequentially performs address coding on the plurality of slave devices according to the positions of the plurality of slave devices in the communication link, and the master device sequentially finish the address coding of all of the plurality of slave devices by transmitting the addressing command. And when data broadcasting or call transmission is performed on the latter stage, the directional data transmission may finish by inserting corresponding address data into the coding command, and the master device may perform ACK response on the plurality of slave devices and may read the plurality of slave devices.

The preferred embodiments of the present disclosure are discussed above but is not used to limit the present disclosure. The person skilled in the art can make various amendments or modification to the present disclosure. Any modification, equivalent replacement, improvement, etc. made within the spirit and principle of the present disclosure shall be within the protection scope of the present disclosure.

List of reference signs:
1~n: slave device
B1~Bn: buffer
MO, MO1~MOn: data output terminal
MI, MI1~MIn: data input terminal
S1~Sn: switch
S100, S101: step

## Claims

1. A single-wire communication method for a single-wire communication system, comprising a master device and a plurality of slave devices, wherein the master device and each of the plurality of slave devices (1~n) are sequentially connected through a single wire, wherein the single-wire communication method comprises:
sequentially transmitting an addressing command to each of the plurality of slave device by the master device, wherein each of the plurality of slave devices (1~n) when receiving the addressing command serves as a current slave device;
if the current slave device has not been addressed, setting an address of the current slave device as address data of the received addressing command; and
if the current slave device has been addressed, transmitting the received addressing command to a next slave device.

2. The single-wire communication method according to claim 1, wherein after the plurality of slave devices (1~n) finish being addressed, coupling a data output terminal (MO) of the master device with a data input terminal (MI1~MIn) of each of the plurality of slave devices (1~n) to perform serial bus communication.

3. The single-wire communication method according to claim 1 or 2, wherein the master device and the plurality of slave devices (1~n) form a communication link, the plurality of slave devices (1~n) in the communication link comprise a first slave device (1) to a nth slave device (n), and n is equal to and greater than one, and the single-wire communication method further comprises:
after the plurality of slave devices (1~n) finish being addressed, connecting a data output terminal (MO) of the master device to a data input terminal (MI1) of the first slave device (1), and connecting the data output terminals (MO1~MOn-1) of the first slave device (1) to the (n-1)th slave device (n-1) to the data input terminals (MI2~Mln) of the second slave device (2) to the nth slave device (n) respectively in the communication link to perform chained serial communication.

4. The single-wire communication method according to any one of claim 1 to claim 3, further comprising: if the current slave device finishes being addressed, controlling the current slave device to be in a pass-through mode.

5. The single-wire communication method according to any one of claim 1 to claim 4, wherein each of the plurality of slave devices (1~n) comprises a switch (S1~Sn), and the switch (S1~Sn) is coupled between a data input terminal (MI1~Mln) and a data output terminal (MO1~MOn) of the corresponding slave device (1 ~n), and the single-wire communication method further comprises:
when the current slave device finishes being addressed, controlling the switch to be turned on; and
when the current slave device does not finish being addressed, controlling the switch to remain off.

6. The single-wire communication method according to any one of claim 1 to claim 4, wherein each of the plurality of slave devices (1~n) comprises a buffer (B1~Bn), and the buffer (B1~Bn) is coupled between a data input terminal (MI1~Mln) and a data output terminal (MO1~MOn) of the corresponding slave device, and the single-wire communication method further comprises:
when the current slave device finishes being addressed, enabling the buffer so that communication channel between the data input terminal and the data output terminal of the current slave device is turned on; and
when the current slave device does not finish being addressed, disabling the buffer so that the communication channel between the data input terminal and the data output terminal of the current slave device remains off.

7. The single-wire communication method according to any one of claim 1 to claim 3, wherein each of the plurality of slave devices (1~n) comprises a communication unit, and the communication unit is coupled between a data input terminal (MI1~Mln) and a data output terminal (MO1~MOn) of the corresponding slave device, and the single-wire communication method further comprises:
when the current slave device finishes being addressed, transmitting the received addressing command to the next slave device by the communication unit;
wherein when the current slave device does not finish being addressed, the communication unit does not transmit the received addressing command to the next slave device.

8. A single-wire communication system comprising:
a master device; and
a plurality of slave devices (1~n);
wherein the master device and the plurality of slave devices (1~n) are sequentially connected through a single wire;
wherein the master device sequentially transmits an addressing command to each of the plurality of slave device, wherein each of the plurality of slave devices (1~n) when receiving the addressing command serves as a current slave device;
wherein if the current slave device has not been addressed, an address of the current slave device is set as address data of the received addressing command;
wherein if the current slave device has been addressed, the received addressing command is transmitted to a next slave device.

9. The single-wire communication system according to claim 8, wherein after the plurality of slave devices (1~n) finish being addressed, a data output terminal (MO) of the master device is coupled with a data input terminal (MI1~MIn) of each of the plurality of slave devices (1~n) to perform serial bus communication.

10. The single-wire communication system according to claim 8 or 9, wherein the master device and the plurality of slave devices (1~n) form a communication link, the plurality of slave devices (1~n) in the communication link comprise a first slave device (1) to a nth slave device (n), and n is equal to and greater than one; wherein after the plurality of slave devices (1~n) finish being addressed, a data output terminal (MO) of the master device is connected to a data input terminal (MI1) of the first slave device (1), and the data output terminals (MO1~MOn-1) of the first slave device (1) to the (n-1)th slave device (n-1) is connected to the data input terminals (MI2~Mln) of the second slave device (2) to the nth slave device (n) respectively in the communication link to perform chained serial communication.

11. The single-wire communication system according to any one of claim 8 to claim 10, wherein if the current slave device finishes being addressed, the current slave device is controlled to be in a pass-through mode.

12. The single-wire communication system according to any one of claim 8 to claim 11, wherein each of the plurality of slave devices (1~n) comprises a switch (S1~Sn), and the switch (S1~Sn) is coupled between a data input terminal (MI1~Mln) and a data output terminal (MO1~MOn) of the corresponding slave device (1~n);
wherein when the current slave device finishes being addressed, the switch is controlled to be turned on; and
when the current slave device does not finish being addressed, the switch is controlled to remain off.

13. The single-wire communication system according to any one of claim 8 to claim 11, wherein each of the plurality of slave devices (1~n) comprises a buffer (B1~Bn), and the buffer (B1~Bn) is coupled between a data input terminal (MI1~Mln) and a data output terminal (MO1~MOn) of the corresponding slave device;
wherein when the current slave device finishes being addressed, the buffer is enabled so that communication channel between the data input terminal and the data output terminal of the current slave device is turned on; and
when the current slave device does not finish being addressed, the buffer is disabled so that the communication channel between the data input terminal and the data output terminal of the current slave device remains off.

14. The single-wire communication system according to any one of claim 8 to claim 10, wherein each of the plurality of slave devices (1~n) comprises a communication unit, and the communication unit is coupled between a data input terminal (MI1~Mln) and a data output terminal (MO1~MOn) of the corresponding slave device;
wherein when the current slave device finishes being addressed, the received addressing command is transmitted to the next slave device by the communication unit; and
when the current slave device does not finish being addressed, the communication unit does not transmit the received addressing command to the next slave device.

15. The single-wire communication system according to any one of claim 8 to claim 14, wherein a data input terminal of the master device is not connected to a data output terminal of a last slave device, or the data input terminal of the master device is connected to the data output terminal of the last slave device.
